# EUROPÄISCHE PATENTSCHRIFT

(11) **EP 1 517 071 B1**
(45) Veröffentlichungstag und Bekanntmachung des Hinweises auf die Patenterteilung: **14.11.2007**
(21) Anmeldenummer: 04017155.5
(22) Anmeldetag: 21.07.2004
(51) Int. Cl.: F16H 63/30

(54) **Klauenschaltung**
Speed coupling
Dispositif de crabotage à échappement

(30) Priorität: 18.09.2003 DE 20314476 U
(43) Veröffentlichungstag der Anmeldung: 23.03.2005
(73) Patentinhaber: Jegel, Franz Peter, Ing., 4407 Steyr-Gleink (AT)
(72) Erfinder: Jegel, Franz Peter, Ing., 4407 Steyr-Gleink (AT)
(74) Vertreter: Staudt, Armin Walter

(56) Entgegenhaltungen:
- EP-A- 1 340 930
- WO-A-01/11272
- AT-U1- 5 145
- DE-C1- 19 808 855

## Beschreibung

Die vorliegende Erfindung betrifft ein Stufenschaltgetriebe in der Art einer Klauenschaltung, bestehend aus einem öldichten Getriebegehäuse, einer Antriebswelle mit einer Anzahl von Zahnrädern und einer Abtriebswelle mit einer Anzahl von korrespondierenden Zahnrädern, welche mit den Zahnrädern der Antriebswelle kämmend in Eingriff stehen, mindestens einer Getriebewelle, mehreren auf dieser Getriebewelle angeordneten Schaltringen mit radial wirkenden Eingriffselementen, welche in das zugeordnete Zahnrad eingreifen, um dieses zu drehen und über dieses Zahnrad ein damit korrespondierendes Zahnrad anzutreiben, wobei eine mit dem Getriebegehäuse fix verbundene Ölverteilerwelle innerhalb der Getriebewelle angeordnet ist und für jede Gangstufe einen gesonderten Hydraulikölkanal aufweist. Weiters betrifft die vorliegende Erfindung auch ein Verfahren zum Betreiben eines Stufenschaltgetriebes.

Herkömmliche Schaltgetriebe sind zum Beispiel dergestalt aufgebaut, dass Kupplungskeile in Ausnehmungen einer die Zahnräder tragenden Hohlwelle durch eine innerhalb der Hohlwelle verschiebbare Nockenstange radial nach außen zum Eingriff in die Hohlwelle umgebende Nuten von Mitnehmerteilen, die mit den Zahnrädern verbunden sind, verschiebbar sind.

Die zur Anwendung kommenden Kupplungselemente, wie einerseits Sperrbolzen oder -zapfen und andererseits an den einzelnen Stufenrädern vorgesehene, mit den Sperrbolzen oder - zapfen in Eingriff zu bringende Ausnehmungen, sind jeweils so gestaltet, ausgebildet und angeordnet, dass kein momentanes, d.h. im Bruchteil einer Sekunde, absolut verzögerungsfreies Gangschalten möglich ist, weil zwischen den einzelnen radial angeordneten Ausnehmungen gelegene Stoßund Verzögerungsflächen zu überwinden sind, wodurch diese Eingriffselemente nicht nur unsicher und stockend arbeiten, sondern auch einem starken Verschleiß unterliegen und äußerst lästige Lärmgeräusche während der Schaltbetätigung verursachen.

Für einen einwandfreien Gangwechsel, sowohl beim Hochschalten als auch beim Zurückschalten, ist es notwendig Zahnräder mit gleicher Umfangsgeschwindigkeit ineinander greifen zu lassen, wobei die Drehzahlanpassung der Wellen über Synchronisierungen erfolgt.
Modernere Stufenschaltgetriebe weisen deshalb Kupplungen mit Synchronisierungen auf, die jeweils zwischen zwei Zahnradpaaren auf der Antriebs- oder Abtriebswelle angeordnet sind, die jedoch einen erheblichen Raumbedarf im Getriebe erfordern.

Es ist daher naheliegend, die Position der Kupplungselemente im Getriebe so festzulegen, dass sie innenliegend zwischen dem Zahnrad und der das Zahnrad tragenden Welle angeordnet sind. Dadurch kann ein Zahnradpaar neben dem anderen angeordnet werden, die axiale Baulänge eines Getriebes wird um den Bauraum der Kupplungen verkleinert, sodass das Schaltgetriebe wesentlich kleiner und leichter ausgebildet werden kann.

Ein derartiges Stufenschaltgetriebe ist bereits bekannt. Hierbei werden die auf einer Hohlwelle sitzenden Zahnräder über Kupplungskeile, die durch Ausnehmungen in der Hohlwelle durchgeführt sind und über eine innenliegende, axial verschiebbare Nockenstange betätigbar sind, formschlüssig mit der Hohlwelle verbunden.

Bei dieser Vorrichtung jedoch, müssen die Kupplungskeile über Schaltkulissen bewegt werden, die sehr genau angepaßt und gefertigt werden. Die Schaltstöße bei der Betätigung und die große Anzahl der mitwirkenden Kontaktflächen bewirken einen großen Verschleiß und ein erhebliches Schaltgeräusch beim Gangwechsel.

Weitere bekannte Ausführungsformen derartiger Stufenschaltgetriebe sind nur mit einem großen baulichen Aufwand herstellbar, die das Gesamtvolumen und das Gewicht unverhältnismäßig vergrößern.

Es war daher ein großes Bedürfnis ein Stufenschaltgetriebe zu schaffen, bei welchem der Wechsel von einem Gang zum nächsten genauso leicht, weich und sicher erfolgen kann, wie bei einem vollsynchronisierten Stufenschaltgetriebe, welches im Gegensatz dazu jedoch keiner zusätzlichen Synchronisierungseinrichtungen bedarf und damit einfacher herzustellen ist, dabei aber auch in vorteilhafter Weise eine erhebliche Reduzierung des Raumbedarfes und des Gewichtes mit sich bringt.

Eine mögliche Lösung dieser Aufgabe ist in der gattungsgemässen AT 5145 U angegeben. Hier ist innerhalb einer Getriebewelle eine mit dem Getriebegehäuse fix verbundene Ölverteilerwelle angeordnet, welche für jede Gangstufe einen gesonderten Hydraulikölkanal aufweist. Das Hydrauliköl wird zu einem ölgefüllten Schlauch geführt, welcher auf der Getriebewelle umlaufend unterhalb eines Schaltringes angeordnet ist. Der Schaltring verfügt über anhebbare Eingriffselemente, welche bei einer Druckbeaufschlagung des darunter liegenden Öldruckschlauches angehoben werden und dabei mit dem zugehörigen Zahnrad in formschlüssige Wechselwirkung treten.

Bei dieser Lösung muß jedoch, die Druckbeaufschlagung des Öldruckschlauches bis zum nächsten Schaltvorgang aufrecht erhalten werden. Mit diesem Nachteil verbunden sind insbesondere auch die Probleme mit der Dichtheit der Schnittstellen.

Die vorliegende Erfindung stellt sich daher die Aufgabe, ein Stufenschaltgetriebe zu schaffen, welches die Vorteile der AT 5145 U aufweist, bei dem jedoch im Gegensatz dazu keine permanente Druckbeaufschlagung notwendig ist.

Diese Aufgabe wird durch ein Stufenschaltgetriebe gelöst, welches die im Hauptanspruch angegebenen technischen Merkmale aufweist.

Vorteilhafte Weiterentwicklungen oder zweckmäßige Ausgestaltungen sind in den Unteransprüchen angegeben.

Die Erfindung wird anhand der Figuren im Folgenden näher erläutert.

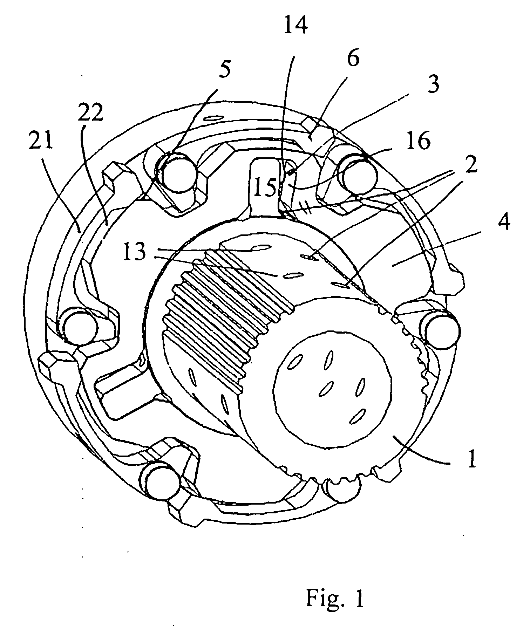

Hierin zeigt Fig. 1 eine Schrägansicht einer hohlen Getriebewelle 1 und einen aufgesetzten Schaltring 4 mit Nocken 6 im aktivierten Zustand.

Fig. 2 stellt den Schaltring aus Fig. 1 im deaktivierten Zustand dar.

Fig. 3 ist eine Schrägansicht des vom Schaltring 4 zu aktivierenden Zahnrades.
Wie aus Fig. 1 ersichtlich, ist die Getriebewelle 1 als Hohlwelle ausgebildet, innerhalb welcher die hier nicht dargestellte Ölverteilerwelle angeordnet ist. Über der Getriebewelle sind für jeden Gang separate Schaltringe 4 angeordnet. Zwischen der Getriebewelle 1 und den Schaltringen 4 befinden sich mit der Getriebewelle 1 starr verbundene Ringe 23 mit Fortsätzen 15. Diese Ausführungsform bietet sich aus fertigungstechnischen Gründen an. Es ist aber auch denkbar, die Getriebewelle 1 so auszubilden, dass die Fortsätze 15 auf ihr fix angebracht sind. Um den Schaltring sind in Umfangsrichtung mehrere radial wirkende Eingriffselemente verteilt angeordnet. Diese bestehen im einfachsten Fall aus Nocken 6.

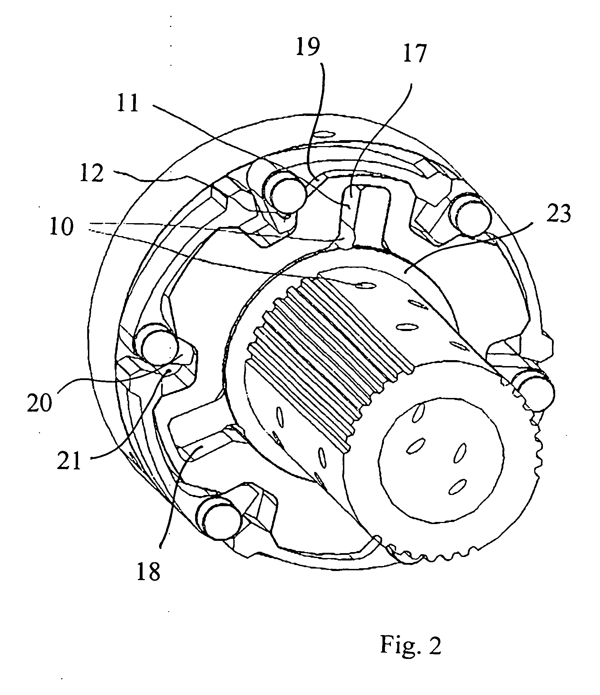

In der hier in den Figuren 1 und 2 dargestellten besonders vorteilhaften Ausführungsform sind die Nocken 6 über Gestänge 21 mit Zapfen 12 und 20 verbunden, welche mit Ausnehmungen 21 und weiteren Flächen 19 zusammen wirken.

Die hier nicht dargestellte Ölverteilerwelle besitzt für jede Gangstufe einen gesonderten Hydraulikölkanal, welcher über eine Bohrung 2 in der Wand der hohlen Getriebewelle 1 mit einem volumenvariablen Ölraum 3 in Wirkverbindung steht. Der Ölraum 3 wird begrenzt einerseits von der Seitenfläche 14 des Fortsatzes 15 und andererseits von der Seitenfläche 16 des beweglich gelagerten Schaltringes 4, sowie von den Seitenflächen benachbarter, nicht aktivierter und hier nicht dargestellter Schaltringe.

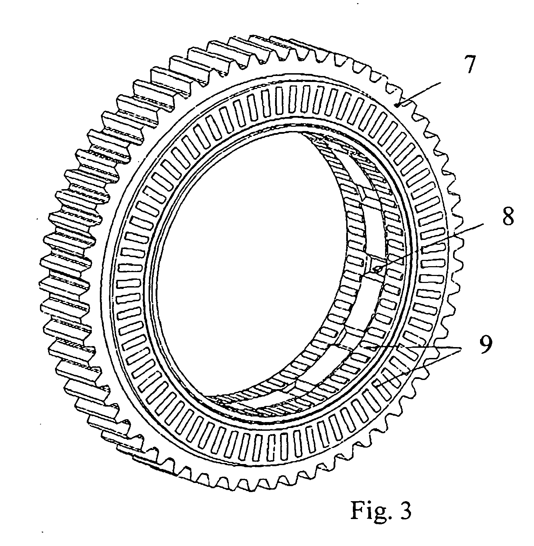

Sobald der Hydraulikölkanal mit Druck beaufschlagt wird, führt das in den Ölraum 3 eintretende Hydrauliköl zu einer Volumenvergrößerung des Ölraumes 3. Der Ölraum 11 ist gleichzeitig nicht mit Druck beaufschlagt. Dadurch wird der Schaltring 4 in der Abbildung nach rechts verdreht. Durch diese Bewegung des Schaltringes 4 gleitet die Nocke 6 über die Schaltschräge 5 auf und wird soweit angehoben, bis sie auf der Fläche 22 des Schaltringes 4 zu liegen kommt und gleichzeitig eine formschlüssige Verbindung mit der in Fig. 3 dargestellten Nut 8 eines Zahnrades 7 eingeht. Die vom Zahnrad 7 über die Nuten 8 eingeleiteten Übertragungskräfte werden dabei auf die Nocken 6 übertragen, wobei die Abstützkräfte auf den Schaltring 4 übertragen werden.

Beim Aufgleiten der Nocken 6 auf die Schaltflächen 5 gleiten gleichzeitig die Zapfen 12 von den Flächen 19 des Schaltringes ab und verlagern sich die Zapfen 20 innerhalb der Ausnehmungen 21 bis zu ihren Endpunkten.

Mit dieser Lösung der gestellten Aufgabe ist es möglich, während der eingeschalteten Getriebestufe keinen permanenten Hydraulikdruck aufrecht erhalten zu müssen. Damit wird eine deutliche Verbesserung des Wirkungsgrades des Schaltgetriebes ermöglicht. Das durch die konstruktionsbedingten Spalten entweichende Öl wird dabei ganz bewusst zur Schmierung der Gleitlager oder - wie in Fig. 3 dargestellt - der Nadellager 9 des Zahnrades verwendet.

Ein weiterer, hier ebenfalls der Übersichtlichkeit wegen nicht dargestellter Hydraulikölsammelkanal ist über Bohrungen 13 in der Wand der hohlen Getriebewelle 1 mit einem volumenvariablen Ölraum 11 in Wirkverbindung. Sobald der Hydraulikölsammelkanal mit Druck beaufschlagt wird, vergrößert sich wie in Fig. 2 dargestellt, das Volumen des Ölraumes 11, wodurch der Schaltring 4 in entgegengesetzte Richtung verdreht wird. Der Ölraum 11 wird begrenzt einerseits von der Seitenfläche 17 eines mit der Getriebewelle 1 fix verbundenen Fortsatzes 15 und andererseits von der Seitenfläche 18 des beweglich gelagerten Schaltringes 4, sowie von den Seitenflächen benachbarter, nicht aktivierter Schaltringe.

Durch Volumenerhöhung im Ölraum 11 wird der Schaltring 4 deaktiviert indem durch Abgleiten der Nocken 6 über die Schaltschrägen 5 die Nocken 6 aus den Nuten 8 herausgeführt werden.

Gleichzeitig mit dem Abgleiten der Nocken 6 über die Schaltflächen 5 gleiten die Zapfen 12 auf die Flächen 19 des Schaltringes 4 auf und verschieben sich die Zapfen 20 innerhalb der Ausnehmungen 21 des Schaltringes 4 bis sie ihre zweite Endposition erreicht haben.

Die Zapfen 12 halten in dieser vorteilhaften Ausgestaltung der Erfindung bei deaktiviertem Schaltring 4 die Nocken 6 entgegen der Fliehkräfte in ihrer Position.

Die besonderen Vorteile dieser Erfindung liegen darin, dass während der eingeschalteten Getriebestufe kein permanenter Hydraulikdruck notwendig ist. Die Druckbeaufschlagung erfolgt lediglich beim Wechsel von einer Gangstufe zur nächsten. Dies bedeutet eine elementare Kosten- und Verbrauchsminderung und gleichzeitig eine Eliminierung der immer problematischen Schnittstellen. Mit der erfindungsgemäßen Lösung der gestellten Aufgabe sind problemlos auch höhere Drehmomente übertragbar.

## Patentansprüche

1. Stufenschaltgetriebe, bestehend aus einem öldichten Getriebegehäuse, einer Antriebswelle mit einer Anzahl von Zahnrädern und einer Abtriebswelle mit einer Anzahl von korrespondierenden Zahnrädern, welche mit den Zahnrädern der Antriebswelle kämmend in Eingriff stehen, mindestens einer Getriebewelle, mehreren auf dieser Getriebewelle angeordneten Schaltringen mit radial wirkenden Eingriffselementen, welche in das zugeordnete Zahnrad eingreifen, um dieses zu drehen und über dieses Zahnrad ein damit korrespondierendes Zahnrad anzutreiben, wobei eine mit dem Getriebegehäuse fix verbundene Ölverteilerwelle innerhalb der Getriebewelle (1) angeordnet ist und für jede Gangstufe einen gesonderten Hydraulikölkanal aufweist, **dadurch gekennzeichnet dass**
- der Hydraulikölkanal über eine Bohrung (2) in der Wand der hohlen Getriebewelle (1) mit einem volumenvariablen Ölraum (3) in Wirkverbindung steht, welcher einen Schaltring (4) in eine Richtung verdreht,
- ein weiterer Hydraulikölsammelkanal über Bohrungen (13) in der Wand der hohlen Getriebewelle (1) mit einem volumenvariablen Ölraum (11) in Wirkverbindung steht, welcher den Schaltring (4) in entgegengesetzte Richtung verdreht,
- der Schaltring (4) über Schaltschrägen (5) Nocken (6) anhebt, wobei die Nocken (6) mit Nuten (8) eines Zahnrades (7) eine formschlüssige Verbindung eingehen und die Nocken (6) in diesem Zustand auf dem Schaltring (4) aufliegen.

2. Stufenschaltgetriebe nach Anspruch 1, **dadurch gekennzeichnet, dass** der Ölraum (3) begrenzt wird einerseits von der Seitenfläche (14) eines mit der Getriebewelle (1) starr verbundenen Fortsatzes (15) und andererseits von der Seitenfläche (16) eines beweglich gelagerten Schaltringes (4), sowie von den Seitenflächen benachbarter, nicht aktivierter Schaltringe.

3. Stufenschaltgetriebe nach Anspruch 1 oder 2, **dadurch gekennzeichnet, dass** der Ölraum (11) begrenzt wird einerseits von der Seitenfläche (17) eines mit der Getriebewelle (1) fix verbundenen Fortsatzes (15) und andererseits von der Seitenfläche (18) eines beweglich gelagerten Schaltringes (4), sowie von den Seitenflächen benachbarter, nicht aktivierter Schaltringe.

4. Stufenschaltgetriebe nach Anspruch 1, 2 oder 3, **dadurch gekennzeichnet, dass** die Nocke (6) über ein Gestänge (21) mit einem Zapfen (12) fix verbunden ist und bei deaktiviertem Schaltring (4) der Zapfen (12) entlang einer Fläche (19) des Schaltringes (4) gleitet.

5. Stufenschaltgetriebe nach Anspruch 1, 2, 3 oder 4, **dadurch gekennzeichnet, dass** die Nocke (6) über ein Gestänge (21) mit einem Zapfen (20) fix verbunden ist, welcher in eine der Ausnehmungen (21) des Schaltringes (4) eingreift.

6. Verfahren zum Betreiben eines Stufenschaltgetriebes für Kraftfahrzeuge, insbesondere nach einem der Ansprüche 1 bis 5, **dadurch gekennzeichnet, dass** durch eine gehäusefeste Hydraulikverteilerwelle ein Ölstrom durch in der Getriebewelle (1) vorhandene Bohrungen (2) in volumenvariable Ölräume (3) oder durch in der Getriebewelle (1) vorhandene Bohrungen (13) in volumenvariable Ölräume (11) geleitet wird, welche durch den Öldruck eine Volumenvergrößerung erfahren und damit einen Schaltring (4) in Drehbewegung versetzen, wodurch der Schaltring (4) aktiviert oder deaktiviert wird.

7. Verfahren nach Anspruch 6, **dadurch gekennzeichnet, dass** durch Volumenerhöhung im Ölraum (3) der Schaltring (4) aktiviert wird indem durch Aufgleiten über Schaltschrägen (5) Nocken (6) angehoben werden und in Nuten (8) eines Zahnrades (7) eingreifen.

8. Verfahren nach Anspruch 6 oder 7, **dadurch gekennzeichnet, dass** die Nocken (6) soweit angehoben werden, bis sie die Schaltschräge (5) verlassen und auf der Fläche (22) des Schaltringes (4) aufliegen.

9. Verfahren nach Anspruch 6, 7 oder 8, **dadurch gekennzeichnet, dass** beim Aufgleiten der Nocken (6) auf die Schaltflächen (5) gleichzeitig die Zapfen (12) von den Flächen (19) des Schaltringes abgleiten und sich die Zapfen (20) innerhalb der Ausnehmungen (21) bis zu ihren Endpunkten verlagern.

10. Verfahren nach Anspruch 6, **dadurch gekennzeichnet, dass** durch Volumenerhöhung im Ölraum (11) der Schaltring (4) deaktiviert wird indem durch Abgleiten der Nocken (6) über Schaltschrägen (5) die Nocken (6) aus den Nuten (8) herausgeführt werden.

11. Verfahren nach Anspruch 6 oder 10, **dadurch gekennzeichnet, dass** gleichzeitig mit dem Abgleiten der Nocken (6) über die Schaltflächen (5) die Zapfen (12) auf die Flächen (19) des Schaltringes (4) aufgleiten bis die Zapfen (20) innerhalb der Ausnehmungen (21) des Schaltringes (4) ihre zweite Endposition erreicht haben.

12. Verfahren nach einem der Ansprüche 6, 10 oder 11, **dadurch gekennzeichnet, dass** die Zapfen (12) bei deaktiviertem Schaltring (4) die Nocken (6) entgegen der Fliehkräfte in ihrer Position halten.

## Claims

1. Multi-speed transmission, comprising an oil-sealed transmission housing, an input shaft with a plurality of gears and an output shaft with a plurality of corresponding gears meshing with the gears of the input shaft, and at least one transmission shaft, a plurality of selector rings placed on said transmission shaft having radially acting locking elements, which lock with the associated gear in order to turn it and drive via this gear a corresponding gear, an oil distributor shaft fixedly attached to the transmission housing being located within the transmission shaft (1) and having a separate hydraulic oil channel for each gear speed, **characterized in that**
- the hydraulic oil channel is connected with an oil space (3) of variable volume via a bore (2) in the wall of the hollow transmission shaft (1), said oil space turning a selector ring (4) in a first direction,
- a further hydraulic oil collecting channel is connected with an oil space (11) of variable volume via bores (13) in the wall of the hollow transmission shaft (1), said oil space turning the selector ring (4) in the opposite direction,
- the selector ring (4) lifts cams (6) by means of ramps (5), the cams (6) locking with notches (8) of a gear (7) and in this state resting against the selector ring (4).

2. Multi-speed transmission according to claim 1, **characterized in that** the oil space (3) is bounded on the one hand by the face (14) of a projection (15) rigidly connected with the transmission shaft (1), and on the other hand by the face (16) of a moveably borne selector ring (4) and by the lateral faces of adjacent deactivated selector rings.

3. Multi-speed transmission according to claim 1 or 2, **characterized in that** the oil space (11) is bounded on the one hand by the face (17) of a projection (15) rigidly connected with the transmission shaft (1) and on the other hand by the face (18) of a moveably borne selector ring (4) and by the lateral faces of adjacent deactivated selector rings.

4. Multi-speed transmission according to claim 1, 2 or 3, **characterized in that** the cam (6) is fixedly connected to a pin (12) via a lever (21), said pin (12) sliding along a face (19) of the selector ring (4) when the selector ring (4) is deactivated.

5. Multi-speed transmission according to claim 1, 2, 3 or 4, **characterized in that** the cam (6) is fixedly connected to a nose (20) via a lever (21), said nose (20) extending into one of the recesses (21) of the selector ring (4).

6. Method of operating a multi-speed transmission for automotive vehicles, in particular according to one of claims 1 to 5, **characterized in that** an oil flow is guided by means of a hydraulic distributor shaft fixed in the transmission housing, into oil spaces (3) of variable volume via bores (2) in the transmission shaft (1), or into oil spaces (11) of variable volume via bores (13) in the transmission shaft (1), which oil spaces undergo an increase in volume due to the oil pressure and thus impart a rotational motion to a selector ring (4), thus activating or deactivating the selector ring (4).

7. Method according to claim 6, **characterized in that** a volume increase in the oil space (3) activates the selector ring (4) by lifting cams (6), which slide on ramps (5), such that they lock with notches (8) of a gear (7).

8. Method according to claim 6 or 7, **characterized in that** the cams (6) are lifted until they clear the ramps (5) and rest on the rim face (22) of the selector ring (4).

9. Method according to claim 6, 7 or 8, **characterized in that** simultaneously with the upward sliding of the cams (6) on the ramps (5) the pins (12) slide from the faces (19) of the selector ring and the noses (20) move in the recesses (21) to their terminal positions.

10. Method according to claim 6, **characterized in that** the volume increase of the oil space (11) deactivates the selector ring (4) by the downward sliding of the cams (6) on the ramps (5), which takes the cams (6) out of the notches (8).

11. Method according to claim 6 or 10, **characterized in that** simultaneously with the downward sliding of the cams (6) on the ramps (5) the pins (12) slide onto the faces (19) of the selector ring (4) until the noses (20) have reached their second terminal position within the recesses (21) of the selector ring (4).

12. Method according to any of claims 6, 10 or 11, **characterized in that** the pins (12) hold the cams (6) in their position against centrifugal forces when the selector ring (4) is deactivated.

## Revendications

1. Boîte de vitesses à rapports, composée d'un boîtier étanche à l'huile, d'un arbre d'entrée avec un certain nombre de pignons et un arbre de sortie avec un certain nombre de pignons correspondants, engrenant avec les pignons de l'arbre d'entrée, au moins un arbre de transmission sur lequel sont installées plusieurs bagues de commutation comportant des éléments de prise à effet radial qui prennent dans le pignon correspondant pour tourner celui-ci et entraîner par ce pignon, un pignon correspondant,
un arbre de distribution d'huile relié solidairement au boîtier de transmission étant logé dans l'arbre de transmission (1) et pour chaque rapport de vitesse, il comporte un canal d'huile hydraulique particulier,
**caractérisée en ce que**
- le canal d'huile hydraulique communique par un perçage (2) de la paroi de l'arbre de transmission creux (1), avec une chambre d'huile (3) de volume variable qui fait tourner une bague de commutation (4) dans une direction,
- un autre canal collecteur d'huile hydraulique coopérant par des perçages (13) dans la paroi de l'arbre de transmission creux (1) avec une chambre à huile (11) de volume variable qui fait tourner la bague de commutation (4) dans la direction opposée,
- la bague de commutation (4) soulève les cames (6) par des rampes de commutation (5), les cames (6) coopérant par une liaison par la forme avec des rainures (8) d'une roue dentée (7) et dans cet état, les cames (6) s'appliquent sur la bague de commutation (4).

2. Boîte de vitesses à rapports selon la revendication 1,
**caractérisée en ce que**
la chambre à huile (3) est délimitée d'un côté par la surface latérale (14) d'un prolongement (15) relié rigidement à l'arbre de transmission (1) et d'autre part par la surface latérale (16) d'une bague de commutation (4) montée mobile ainsi que de bagues de commutation non activées, voisines des surfaces latérales.

3. Boîte de vitesses à rapports selon la revendication 1 ou 2,
**caractérisée en ce que**
la chambre à huile (11) est délimitée d'un côté par la surface latérale (17) d'un prolongement (15) solidaire de l'arbre de transmission (1) et de l'autre par la surface latérale (18) d'une bague de commutation (4) montée mobile ainsi que par les surfaces latérales de bagues de commutation voisines non activées.

4. Boîte de vitesses à rapports selon les revendications 1, 2 ou 3,
**caractérisée en ce que**
la came (6) est reliée par une tringlerie (21) à un goujon (12), de manière solidaire et lorsque la bague de commutation (4) est neutralisée, le goujon (12) glisse le long d'une surface (19) de la bague de commutation (4).

5. Boîte de vitesses à rapports selon les revendications 1, 2, 3 ou 4,
**caractérisée en ce que**
la came (6) est reliée solidairement par une tringlerie (21) à un goujon (20) qui pénètre dans l'une des cavités (21) de la bague de commutation (4).

6. Procédé de commande d'une boîte de vitesses à rapports de véhicule automobile notamment selon l'une des revendications 1 à 5,
**caractérisé par**
un arbre de distribution hydraulique solidaire du boîtier qui conduit un courant d'huile à travers des perçages (2) existant dans l'arbre de transmission (1), vers des chambres à huile (3) de volume variable ou par des perçages (13) existant dans l'arbre de transmission (1), dans des chambres à huile de volume variable (11), et qui augmentent le volume par la pression d'huile et font tourner ainsi une bague de commutation (4) qui est ainsi activée ou neutralisée.

7. Procédé selon la revendication 6,
**caractérisé en ce que**
par augmentation du volume dans la chambre d'huile (3) on active la bague de commutation (4) en soulevant les cames (6) par leur glissement sur les rampes de commutation (5) et en les faisant pénétrer dans les rainures (8) d'un pignon (7).

8. Procédé selon les revendications 6 ou 7,
**caractérisé en ce qu'**
on soulève les cames (6) jusqu'à ce qu'elles quittent les rampes de commutation (5) et s'appuient sur la surface (22) de la bague de commutation (4).

9. Procédé selon les revendications 6, 7, 8,
**caractérisé en ce qu'**
en glissant sur les surfaces de commutation (5), les cames (6) dévient en même temps les goujons (2) des surfaces (19) de la bague de commutation et les goujons (20) se déplacent dans les cavités (21) jusqu'à leur fin de course.

10. Procédé selon la revendication 6,
**caractérisé en ce qu'**
en augmentant le volume dans la chambre d'huile (11) on neutralise la bague de commutation (4) **en ce que** par glissement des cames (6) sur les rampes de commutation (5), on dégage les cames (6) des rainures (8).

11. Procédé selon les revendications 6 ou 10,
**caractérisé en ce qu'**
en même temps que les cames (6) glissent sur les surfaces de commutation (5), les goujons (12) glissent sur les surfaces (19) de la bague de commutation (4) jusqu'à ce que les goujons (20) soient arrivés dans leur seconde position de fin de course dans les cavités (21) de la bague de commutation (4).

12. Procédé selon l'une des revendications 6, 10 ou 11,
**caractérisé en ce que**
lorsque la bague de commutation (4) est neutralisée, les goujons (20) tiennent les cames (6) en place contre la force centrifuge.
